# EUROPEAN PATENT APPLICATION

(11) **EP 4 848 198 A1**
(43) Date of publication of application: **02.12.2026**
(21) Application number: 26180895.0
(22) Date of filing: 26.05.2026
(51) Int. Cl.: G06T 5/50, G06T 7/246

(54) **CONTROL APPARATUS, IMAGE CAPTURING SYSTEM, METHOD, AND COMPUTER PROGRAM**

(30) Priority: 27.05.2025 JP 2025088214
(71) Applicant: Canon Kabushiki Kaisha, Tokyo 146-8501 (JP)
(72) Inventor: SHIN, Akihito, Ohta-ku, Tokyo, 146-8501 (JP)
(74) Representative: TBK

(57) **Abstract**

A control apparatus, comprising one or more memories storing instructions, and one or more processors executing the instructions to control an image displayed on a display device to display a composite image in which background CG and an index are synthesized on the display device, and correct the index from a video obtained by capturing the display device on which the composite image is displayed with an image capturing apparatus, wherein the index is used for tracking a three-dimensional position and direction of the image capturing apparatus.

## Description

### TECHNICAL FIELD

The present disclosure relates to a control apparatus, an image capturing system, a method, and a computer program.

### BACKGROUND

VFX (Visual Effects) technology, which generates images of unrealistic scenes by synthesizing computer graphics (hereinafter, CG) into live-action video, is attracting attention. In addition, a method (in-camera VFX imaging) is known in which a subject is captured against a background of a display device or screen that displays CG, thereby obtaining a VFX video without synthesis processing.

In order to realize a VFX video without a sense of incongruity, it is necessary to match the position and orientation of a virtual camera when rendering CG with the position and orientation of an image capturing apparatus that captures the live-action video. Therefore, it is necessary to detect the position and orientation of the image capturing apparatus and change the CG according to the detected position and orientation.

"Tracking" is used as one method for detecting the position and orientation of an image capturing apparatus. Tracking is a technology that captures visual features in a video to follow the position of an object and tracks the visual features. An artificially created version of these visual features is referred to in the present disclosure as an "index (marker)". In a situation where an index exists in the environment and its position can be specified, the movement of the index within the video can be tracked as the movement of the image capturing apparatus. Thereby, it is possible to detect the position and orientation of the image capturing apparatus by tracking.

US Patent Application Publication No. 2024/0305738 proposes making the display update cycle of background CG a high frequency as a method for performing in-camera VFX imaging using an index. In this way, there is a method of capturing while shifting the capturing timing of the image capturing apparatus while displaying the background CG and the index image on the display device in a time-division manner.

Further, US Patent Application Publication No. 2024/0029293 proposes a method of embedding an index in an LED and using the index so that it is visible only to an image capturing apparatus that performs tracking. Thereby, the index is visible to the image capturing apparatus that performs tracking. On the other hand, an image capturing apparatus for broadcasting is prepared separately, and the index is prevented from being visible to the image capturing apparatus for broadcasting. This makes it possible to use the video for broadcasting without time-division while performing tracking.

### SUMMARY

During broadcasting, it is desired to use only the video of the background CG. However, as in US Patent Application Publication No. 2024/0305738, when capturing is performed while displaying the background CG and the index image in a time-division manner, the time during which capturing is possible by the image capturing apparatus becomes short. If the imageable time becomes short, the movement becomes jerky, or it becomes impossible to take a shutter angle for countering flicker. Therefore, horizontal streaks may appear in the video.

Further, in US Patent Application Publication No. 2024/0029293, since the index is physically embedded in the LED, the position of the index cannot be changed. In particular, there is a demand for increasing tracking accuracy by placing indices densely within the angle of view of the image capturing apparatus when the image capturing apparatus is in a telephoto (TELE) state (a state where the focal length of a zoom lens is made the longest). However, since the position of the index is fixed, the degree of freedom in index placement is reduced.

In view of the above, the present disclosure provides a video in which unnaturalness of movement and appearance is suppressed, and the occurrence of horizontal streaks of flicker is suppressed.

The present disclosure in its first aspect provides a control apparatus as specified in claim 1. Optional features are specified in claims 2 to 16.

The present disclosure in its second aspect provides an image capturing system as specified in claim 17. Optional features may be specified in or derived from claims 2 to 16.

The present disclosure in its third aspect provides a method as specified in claim 18. Optional features may be specified in or derived from claims 2 to 16.

The present disclosure in its fourth aspect provides a computer program as specified in claim 19. Optional features may be specified in or derived from claims 2 to 16.

Features of the present disclosure will become apparent from the following description of embodiments with reference to the attached drawings. The following description of embodiments is described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
FIG. 1 is a block diagram showing a configuration of an image capturing apparatus 100 according to a first embodiment.
FIG. 2 is a diagram showing an example of an in-camera VFX video image capturing system 1000 according to the first embodiment.
FIG. 3 is a block diagram showing a functional configuration of an external control apparatus 180 according to the first embodiment.
FIG. 4 is a flowchart explaining an operation of the image capturing system 1000 according to the first embodiment.
FIG. 5 is a diagram showing an example of a composite image of background CG and an index image according to the first embodiment.
FIG. 6 is a flowchart explaining an operation of the image capturing system 1000 according to a second embodiment.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### <First Embodiment>

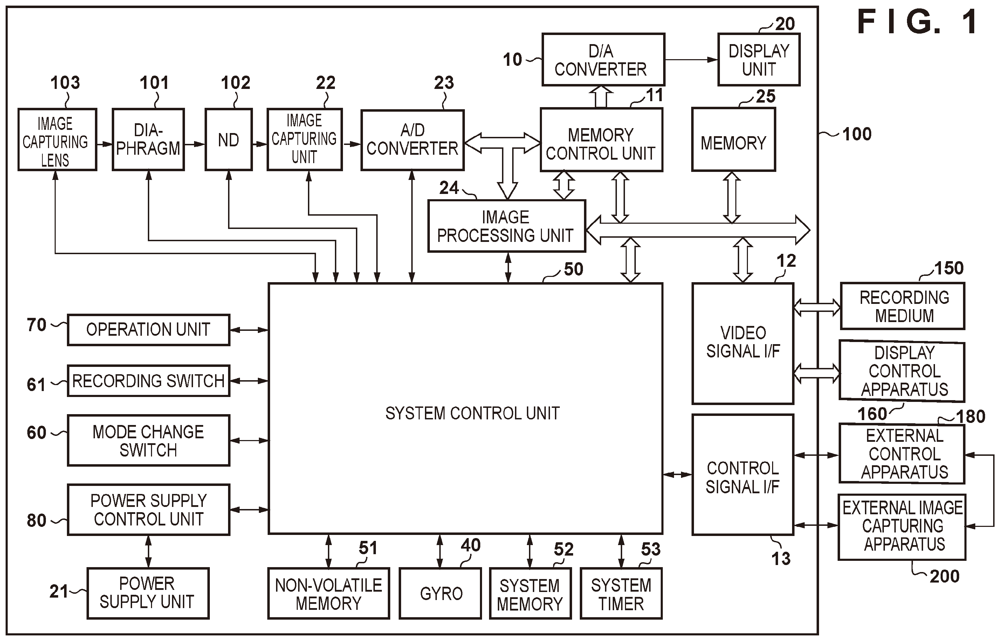

FIG. 1 is a block diagram showing a configuration of an image capturing apparatus 100 according to a first embodiment. The first embodiment can detect the position and orientation of the image capturing apparatus 100 while acquiring a video captured by the image capturing apparatus 100 in a state where background CG is displayed on the display device 400. Thereby, the image capturing apparatus 100 can ensure a long exposure time during capturing.

An image capturing lens 103 (imaging optical system) has a plurality of lenses including a movable lens. The movable lens includes at least a focus lens, and optionally further includes one or more of a zoom lens and a shift lens. The image capturing lens 103 forms a subject optical image on an image sensing surface. A diaphragm 101 can variably control an aperture amount and adjusts an incident light amount. The aperture amount of the diaphragm 101 is controlled by a system control unit 50 described later. An ND 102 (Neutral Density) is a light reduction filter inserted into an optical path as necessary. An image capturing unit 22 has an image capturing element. The image capturing element may be, for example, a known CCD or CMOS color image sensor having color filters of a primary color Bayer array. The image capturing element has a pixel array in which a plurality of pixels are two-dimensionally arranged, and peripheral circuits for reading out signals from each pixel. Each pixel accumulates a charge corresponding to the incident light amount by photoelectric conversion. A signal having a voltage corresponding to the charge amount accumulated during the exposure period is read out from each pixel. Thereby, a pixel signal group (analog image signal) representing the subject optical image formed on the image sensing surface is obtained.

An A/D converter 23 A/D converts the analog image signal read out from the image capturing unit 22 and outputs a digital image signal (image data). Note that when the image capturing unit 22 has an A/D conversion function, the A/D converter 23 is unnecessary. An image processing unit 24 executes predetermined image processing on image data output by the A/D converter 23 and/or a memory control unit 11. The image processing unit 24 generates signals and image data according to the application, and acquires and/or generates various types of information.

The image processing unit 24 may be, for example, a dedicated hardware circuit such as an ASIC (Application Specific Integrated Circuit) designed to realize a specific function. Alternatively, the image processing unit 24 may have a configuration in which a processor such as a DSP (Digital Signal Processor) and a GPU (Graphics Processing Unit) realizes a specific function by executing software. The image processing unit 24 outputs acquired or generated information and/or data to the system control unit 50 and/or the memory control unit 11 or the like according to the application.

The image processing executed by the image processing unit 24 includes, for example, pre-processing, color interpolation processing, correction processing, detection processing, data processing, evaluation value calculation processing, and special effect processing. Pre-processing includes, for example, signal amplification, reference level adjustment, and defective pixel correction. Color interpolation processing is performed when color filters are provided on the image capturing element. Color interpolation processing is processing for interpolating values of color components not included in individual pixel data constituting the image data. Color interpolation processing is also called demosaicing processing. Correction processing includes, for example, processing such as white balance adjustment, gradation correction, correction of image degradation caused by optical aberration of the image capturing lens 103 (image recovery), correction of the influence of peripheral light reduction of the image capturing lens 103, and color correction. Detection processing includes, for example, detection of characteristic regions (for example, a face region, a human body region) and movement thereof, and person recognition processing. Data processing includes processing such as region clipping (cropping), synthesis, scaling, encoding and decoding, and header information generation (data file generation). Further, generation of display image data and recording image data is included in data processing. Evaluation value calculation processing includes processing such as generation of signals and evaluation values used for automatic focus detection (AF), and generation of evaluation values used for automatic exposure control (AE). Special effect processing includes processing such as addition of a blur effect, change of color tone, and relighting. Note that the above image processing is an example of processing executable by the image processing unit 24, and does not limit the processing executed by the image processing unit 24.

A gyro 40 is a motion sensor that outputs a signal representing movement of the image capturing apparatus 100. The gyro 40 is, for example, a three-axis angular velocity sensor that detects angular velocities around three axes: an axis parallel to the optical axis of the image capturing lens 103, an axis parallel to the direction of gravity, and an axis orthogonal to these two axes. Note that a sensor that detects acceleration in each axial direction may be used in combination. The system control unit 50 detects movement of the image capturing apparatus 100 based on the output from the gyro 40. The system control unit 50 controls the position of a shift lens included in the image capturing lens 103 and the position at which the image processing unit 24 crops a captured image according to the detected movement of the image capturing apparatus 100. Thereby, an image stabilization function is realized.

The system control unit 50 is, for example, a processor (CPU, MPU microprocessor, etc.) capable of executing a program. The system control unit 50 controls operations of each unit of the image capturing apparatus 100 by reading a program stored in a non-volatile memory 51 into a system memory 52 and executing it. The system control unit 50 realizes functions of the image capturing apparatus 100. Note that when the image capturing lens 103 is interchangeable, the system control unit 50 communicates with a controller included in the image capturing lens 103 to control the operation of the image capturing lens 103. Further, the system control unit 50 controls operations related to image capturing and recording. Specifically, the system control unit 50 controls automatic exposure control (AE) and automatic focus detection (AF) operations based on evaluation values generated by the image processing unit 24, image capturing operations by the image capturing unit 22, operations of the image processing unit 24, and recording operations of recording image data onto a recording medium 150.

The non-volatile memory 51 is an electrically rewritable memory. The non-volatile memory 51 stores programs executed by the system control unit 50, various setting values of the image capturing apparatus 100, GUI data, and the like. The system memory 52 reads programs executed by the system control unit 50 and temporarily stores variables and the like during execution of the programs. Image data output by the A/D converter 23 is supplied to the memory control unit 11 directly or via the image processing unit 24. The memory control unit 11 manages access to a memory 25. The memory control unit 11 stores image data supplied from the A/D converter 23 or the image processing unit 24 in the memory 25. Further, the memory control unit 11 supplies display image data stored in a video memory area of the memory 25 to a D/A converter 10.

The D/A converter 10 generates an analog video signal suitable for a display unit 20 based on the display image data. The memory 25 is used as a buffer memory for data, a working memory for the image processing unit 24, a video memory, and the like. The display unit 20 is, for example, a liquid crystal display or an organic EL display. Moving image shooting by the image capturing unit 22 and display of the obtained moving image on the display unit 20 are continuously executed. Thereby, the display unit 20 can function as an electronic viewfinder (EVF). A moving image displayed to make the display unit 20 function as an EVF is referred to as a "live view image". Note that the display unit 20 may be a touch display. A system timer 53 has a clock generator that outputs a reference clock and a built-in clock. The system timer 53 supplies a clock signal generated based on the reference clock to each functional block of the image capturing apparatus 100. Further, the system timer 53 supplies information on the current date and time using the built-in clock or measures a specific length of time.

In the present embodiment, the clock signal generated by the system timer 53 can be supplied to an external device (for example, the external control apparatus 180 and/or an external image capturing apparatus 200) through a control signal I/F 13. In this case, the clock signal is used as a signal (external clock) for synchronizing the operation of the external device with the operation of the image capturing apparatus 100. Note that in the present disclosure, the external control apparatus 180 is also simply referred to as "control apparatus 180". On the other hand, it is also possible to receive a clock signal (hereinafter also referred to as an external clock) from an external device (for example, the external control apparatus 180 and/or the external image capturing apparatus 200) through the control signal I/F 13. In this case, the system control unit 50 controls the system timer 53 to generate a clock signal based on the external clock. Thereby, the operation of the image capturing apparatus 100 can be synchronized with the operation of a device that supplies the external clock (or another device that receives the same external clock). The control signal I/F 13 can communicate with each of the external control apparatus 180 and the external image capturing apparatus 200. Further, the system control unit 50 can control the operation of the image capturing apparatus 100 according to a control signal supplied from an external device through the control signal I/F 13.

For example, the system control unit 50 can control the operation of the image capturing unit 22 and the operation of the image processing unit 24 according to a control signal supplied from an external device. Further, the system control unit 50 can transmit information regarding the image capturing apparatus 100 to the requesting external device in response to a request by a control signal supplied from the external device. Furthermore, the system control unit 50 can output information regarding the timing of operation (for example, capturing) of the image capturing apparatus 100 to the external control apparatus 180 and the external image capturing apparatus 200 through the control signal I/F 13. Information on the operation cycle of the image capturing apparatus 100 is notified to the external image capturing apparatus 200 through the control signal I/F 13. Thereby, the operation cycle of the image capturing apparatus 100 and the operation cycle of the external image capturing apparatus 200 can be matched. Meanwhile, the system control unit 50 receives information on the operation cycle from the external image capturing apparatus 200 via the control signal I/F 13 and controls the operation timing of the image capturing apparatus 100. Thereby, the operation cycle of the image capturing apparatus 100 can be matched with the operation cycle of the external image capturing apparatus 200.

Furthermore, the system control unit 50 receives information on the operation cycle from the external image capturing apparatus 200 via the control signal I/F 13 while notifying information on the operation cycle of the image capturing apparatus 100 to the external image capturing apparatus 200 through the control signal I/F 13. By controlling the operation timing of the image capturing apparatus 100, the system control unit 50 can perform control so that the operation timing of the image capturing apparatus 100 is different from that of the external image capturing apparatus 200 so that their operation cycles do not overlap each other. Further, during capturing, the system control unit 50 can record information regarding capturing as metadata in a video signal. Information regarding capturing includes, for example, various settings of the image capturing apparatus 100, information transmitted from the external control apparatus 180 through the control signal I/F 13 during capturing, and data calculated within the image capturing apparatus 100 based on that information.

A mode change switch 60, a recording switch 61, and an operation unit 70 are examples of operation members (for example, switches, buttons, dials, levers, touch panels, etc.) for a user to input instructions to the image capturing apparatus 100 (system control unit 50). The mode change switch 60 is a switch for switching (selecting) an operation mode of the image capturing apparatus 100. Representative operation modes include, but are not limited to, a moving image recording mode, a still image recording mode, and a playback mode. Note that the operation modes may be layered.

For example, the moving image recording mode includes two or more of an auto shooting mode, an auto scene judgment mode, a manual mode, a scene mode, a program AE mode, a custom mode, and the like. Further, the scene mode includes a plurality of modes (night scene mode, starry sky mode, portrait mode, sports mode, etc.) corresponding to target scenes. The mode change switch 60 may be configured to allow selection of all operation modes, or may be configured to allow selection of only operation modes of a specific layer. In the latter case, operation modes of other layers are configured to be selected using another operation member. Every time the recording switch 61 is operated, the image capturing apparatus 100 switches between a capturing standby state and a capturing state. Note that capturing here is capturing an image for the purpose of recording. Capturing not for the purpose of recording (for example, capturing for live view display) is also carried out in the capturing standby state.

The operation unit 70 is a general term for operation members other than the mode change switch 60 and the recording switch 61. Operation members constituting the operation unit 70 have names corresponding to their assigned functions. Names of operation members corresponding to assigned functions are, for example, a directional key, a menu button, a determination button, and the like. Note that functions assigned to the same operation member may be variable. Further, the operation member may be a software button or key using a touch display. Further, the operation unit 70 may have an input member corresponding to non-contact input methods such as voice input and line-of-sight input.

A power supply control unit 80 has a battery detection circuit, a DC-DC converter, a switch circuit for switching blocks to be energized, and the like. The power supply control unit 80 detects presence or absence of a battery, the type of battery, and the remaining battery level. Further, the power supply control unit 80 controls the DC-DC converter based on the detection result and instructions from the system control unit 50 and supplies appropriate voltages to each unit of the image capturing apparatus 100. A power supply unit 21 includes at least any one of primary batteries such as alkaline batteries and lithium batteries, secondary batteries such as NiCd batteries, NiMH batteries, and Li-ion batteries, and an AC adapter. Moving image data for recording (including audio data) and still image data obtained by capturing are recorded on the recording medium 150.

The recording medium 150 includes, for example, semiconductor memory cards and external recording devices (HDD, SSD, etc.). A video signal I/F 12 is an interface with the recording medium 150 and a display control apparatus 160. The video signal I/F 12 has hardware according to specifications with which the connected equipment and/or the recording medium 150 comply. In the present embodiment, the image capturing apparatus 100 can output a video signal to the outside (display control apparatus 160) through the video signal I/F 12 based on image data for display. The display control apparatus 160 applies gradation characteristics (gamma curve) corresponding to a display device (not shown) to the video signal output from the image capturing apparatus 100 through the video signal I/F 12, and outputs the video signal to the display device 400 described later.

### (Image Capturing System)

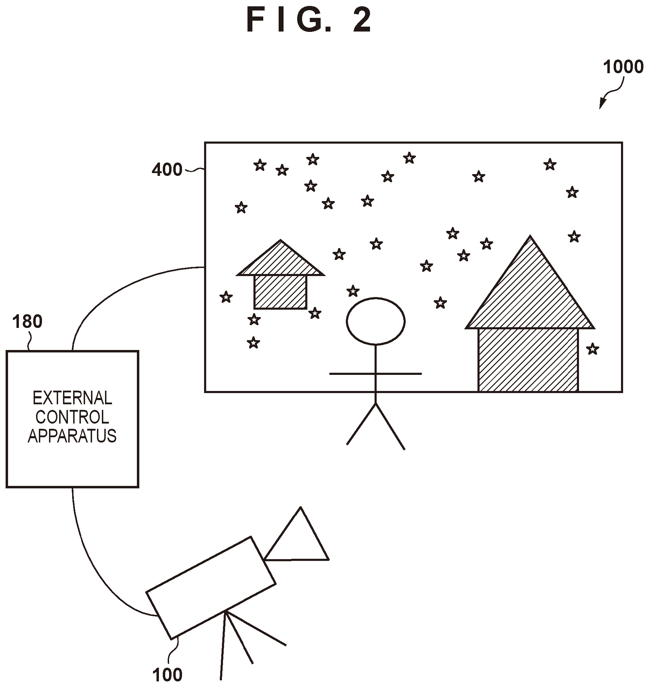

FIG. 2 is a diagram showing an example of an in-camera VFX video image capturing system 1000 according to the first embodiment. Note that in FIG. 2, it should be noted that the scale of each apparatus is not unified. The image capturing system 1000 has the image capturing apparatus 100, the external control apparatus 180 which is a control apparatus of the image capturing system 1000, and the display device 400. Further, the image capturing system 1000 may have two or more image capturing apparatuses 100.

The display device 400 displays an image (a composite image including background CG) that becomes the background of a scene captured by the image capturing apparatus 100. The display device 400 has, for example, a large number of LED panels arranged in vertical and horizontal directions of the display device 400, and is sometimes called an LED wall. In the present specification, for ease of explanation and understanding, it is assumed that the display device 400 has one LED panel and the external control apparatus 180 directly controls the display of the display device 400. Note that a display control apparatus for dividing and displaying the CG image rendered by the external control apparatus 180 on a large number of LED panels included in the display device 400 can be used separately.

When rendering a CG image according to the position and orientation of the image capturing apparatus 100, the external control apparatus 180 can specify a range actually captured within the screen of the display device 400 based on position and orientation information and information on the angle of view (focal length of the image capturing lens) acquired from the image capturing apparatus 100. For example, the external control apparatus 180 may reduce the processing load of rendering by rendering the CG with lower image quality outside the capturing range (outer frustum) than inside the capturing range (inner frustum).

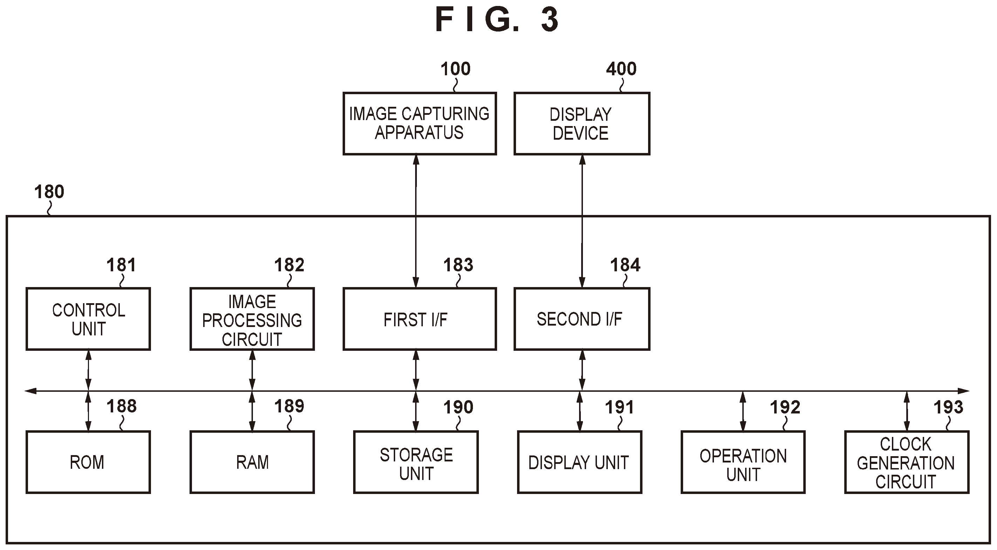

FIG. 3 is a block diagram showing a functional configuration of the external control apparatus 180 according to the first embodiment. The external control apparatus 180 is, for example, computer equipment (desktop or notebook personal computer, smartphone, tablet, server).

A control unit 181 is, for example, a CPU (Central Processing Unit). The CPU of the control unit 181 realizes the functions of the external control apparatus 180 by reading a program (display control application program) stored in a ROM 188 (Read Only Memory) into a RAM 189 (Random Access Memory) and executing it. The ROM 188 is a non-volatile memory. The RAM 189 is a volatile memory.

An image processing circuit 182 is, for example, a graphics board equipped with a GPU (Graphics Processing Unit). The image processing circuit 182 can execute image processing such as rendering of CG, generation of an index image, synthesis of CG and an index image, and image correction faster than the control unit 181.

A first I/F 183 and a second I/F 184 are communication interfaces for connecting external equipment. In the present embodiment, it is assumed that the image capturing apparatus 100 is connected to the first I/F 183 and the display device 400 is connected to the second I/F 184. In the present embodiment, the first I/F 183 and the second I/F 184 can transmit video signals, synchronization signals, and control signals. Note that in order to enable connection of more equipment, it may have more communication interfaces (for example, four or more communication interfaces).

For convenience, it is illustrated that the external control apparatus 180 and the image capturing apparatus 100, and the external control apparatus 180 and the display device 400, are each connected through one I/F (first I/F 183 or second I/F 184). Here, the external control apparatus 180 and the image capturing apparatus 100, and the external control apparatus 180 and the display device 400, may be connected through a plurality of different I/Fs according to signals to be communicated.

The control unit 181 acquires information and signals from the image capturing apparatus 100 and the display device 400 through the first I/F 183 and the second I/F 184, controls operations of the image capturing apparatus 100 and the display device 400, and transmits video signals. The ROM 188 stores (records) programs executed by the control unit 181 (firmware, OS (Operating System), application programs, etc.), GUI (Graphical User Interface) image data for menu screens and the like, setting values of the external control apparatus 180, and the like. The RAM 189 is used as a main memory for the control unit 181. Further, the RAM 189 is used as a working memory for the image processing circuit 182 and a video memory for a display unit 191.

A storage unit 190 is a large-capacity storage device such as a hard disk and an SSD (Solid State Drive). The storage unit 190 stores (records) data necessary for rendering the CG to be displayed on the display device 400 (3D models, etc.) and applications for rendering the CG. Note that the OS and applications may be stored (recorded) in the storage unit 190 instead of the ROM 188.

The display unit 191 is, for example, a liquid crystal display device. The display unit 191 may be, for example, a touch display. The display unit 191 displays a screen of an image capturing control application or the like. Further, the display unit 191 may display a video signal output by the image capturing apparatus 100 from the video signal I/F 12. Further, the display unit 191 may be an external display device. An operation unit 192 is a plurality of input devices operable by a user, and has, for example, a keyboard, a mouse, a touchpad, and the like. When the display unit 191 is a touch display, a touch panel constitutes the operation unit 192. A clock generation circuit 193 generates a synchronization signal (clock) for synchronizing operations of the image capturing apparatus 100 and the display device 400. Note that the clock may be acquired from an external device (including the image capturing apparatus 100 and the display device 400).

### (Operation of Image Capturing System)

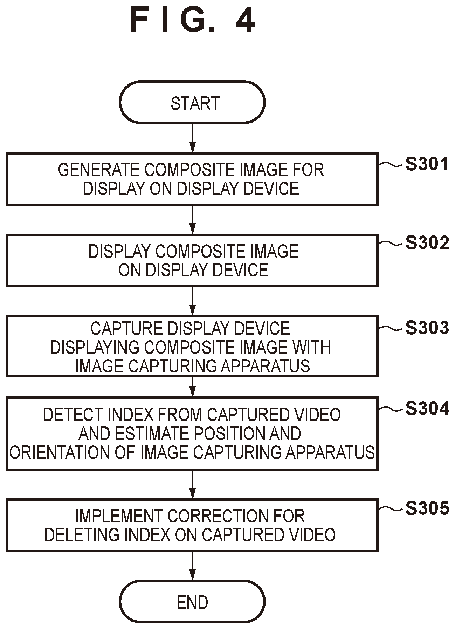

FIG. 4 is a flowchart explaining an operation of the image capturing system 1000 according to the first embodiment. Here, the external control apparatus 180 (control unit 181) controls operations of the image capturing apparatus 100 and the display device 400 by executing the image capturing control application. However, the control performed by the external control apparatus 180 may be implemented by the device to be controlled itself (that is, the image capturing apparatus 100 and the display device 400), or may be implemented by another device (excluding the external control apparatus 180).

Note that before starting the following operations, necessary pre-processing (setting of each device, connection between devices, etc.) is assumed to be completed. Specifically, the image capturing control application is running in the external control apparatus 180. Further, it is assumed that the external control apparatus 180 has already acquired information necessary for controlling the operations of the image capturing apparatus 100 and the display device 400 from each device connected to the external control apparatus 180. Further, it is assumed that an operation mode in which the external control apparatus 180 can control the operations of the image capturing apparatus 100 and the display device 400 is set for the image capturing apparatus 100 and the display device 400.

In the following description, operations performed with the image capturing apparatus 100 as the agent are implemented by the system control unit 50. Operations performed with the external control apparatus 180 as the agent are implemented by the control unit 181. In the present disclosure, the control unit 181 controls an image displayed on the display device 400. Further, the control unit 181 displays a composite image in which background CG and an index (or index image) are synthesized on the display device 400. Here, the index may be a concept encompassing a part or all of an index image.

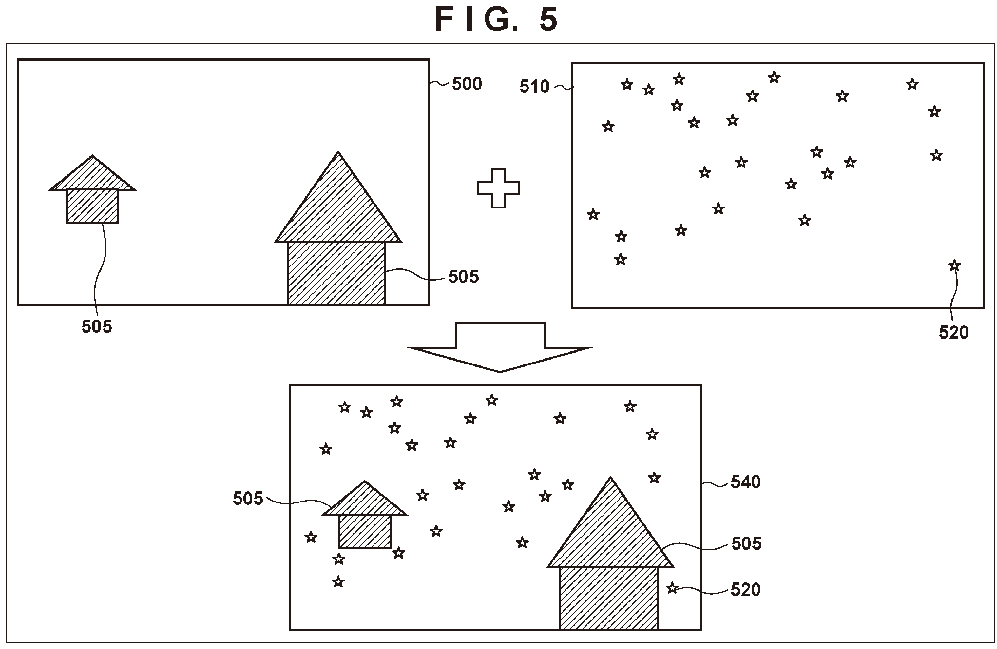

In step S301, the external control apparatus 180 generates a composite image 540 to be displayed on the display device 400. Here, FIG. 5 is a diagram showing an example of a composite image of background CG and an index image according to the first embodiment.

FIG. 5 shows background CG 500, an index image 510, and a composite image 540. The background CG 500 shows an image rendered by the external control apparatus 180 (control unit 181). The background CG 500 includes a large and a small building 505, but display objects in the background CG 500 are not particularly limited. The index image 510 is an image for detecting the position and orientation of the image capturing apparatus 100, and includes, for example, a plurality of indices 520. The index 520 is illustrated, for example, as a star shape, but the shape and size of the index 520 are not particularly limited. The composite image 540 is an image displayed on the display device 400, and is an image in which the background CG 500 and the index image 510 are synthesized. The description of step S301 in FIG. 4 is now returned to.

Specifically, the external control apparatus 180 renders the background CG 500 based on position and orientation information of the image capturing apparatus 100 and the display device 400. The external control apparatus 180 generates the composite image 540 (see FIG. 5) to be displayed on the display device 400 by synthesizing the rendered "background CG 500" and the "index image 510" for detecting the position and orientation of the image capturing apparatus 100. The method of rendering the background CG 500 based on the position and orientation information described here may be a generally known method (for example, ray tracing, scanline, Z-buffer method, toon rendering, radiosity). The background CG 500 may be rendered using one or more of these methods.

For example, a camera in virtual space may be moved in the same way as the image capturing apparatus 100 based on the position and orientation information, and the video captured by that virtual camera may be used. The "index image 510" used for detecting the position and orientation of the image capturing apparatus 100 may be any image as long as the position of an object (for example, the index 520) can be tracked and visual features of the object can be captured. For example, a large number of indices 520 having luminance, color, and pixel values not used in the background CG 500 may be scattered in the index image 510. Further, in the index image 510, the indices 520 may be arranged to be distributed in places where it is easy to remove the indices 520 in a subsequent process (specifically, step S305 in FIG. 4) (for example, parts slightly distant from characteristic parts in the background CG 500 (parts where objects such as buildings 505 exist) and/or flat parts, etc.). In this case, the display position of the index 520 on the display device 400 is a position suitable for correcting (for example, deleting, replacing, etc.) the index 520 appearing in the video (a part slightly distant from characteristic parts in the background CG 500 and/or a flat part, etc.). Further, as a method for synthesizing the background CG 500 and the index image 510, the entire index image 510 may be synthesized, or only the index 520 in the index image 510 may be synthesized, and no particular limitation is made thereto.

In step S302, the external control apparatus 180 transmits the composite image 540 generated in step S301 to the display device 400, and displays the composite image 540 on the display device 400. When displaying the composite image 540, the display device 400 may implement display processing of the composite image 540 after receiving a direct instruction from the external control apparatus 180. Alternatively, the display device 400 may display the composite image 540 in synchronization with a clock of the display device 400 after a control part in the display device 400 or a device attached to the display device 400 receives a display instruction signal from the external control apparatus 180. In this way, display processing of the composite image 540 may be implemented by providing one step of additional processing.

In step S303, the external control apparatus 180 transmits a capturing instruction to the image capturing apparatus 100 and captures a video including the composite image 540 on the display device 400. The external control apparatus 180 may transmit a capturing instruction for every frame to the image capturing apparatus 100. Alternatively, the external control apparatus 180 does not have to transmit a capturing instruction to the image capturing apparatus 100 after transmitting a capturing instruction once until transmitting a capturing stop instruction to the image capturing apparatus 100. Since it is sufficient if imaging can be performed during a period when the user wants to image, the capturing frequency will not be particularly mentioned. Further, the image capturing apparatus 100 captures the index 520 of the composite image 540 on the display device 400 with an angle of view that includes a number of indices 520 by which it is possible to detect the position and orientation of the image capturing apparatus 100. In one embodiment, the angle of view when the image capturing apparatus 100 captures the display device 400 is an angle of view at which a number of indices 520 by which it is possible to track at least the three-dimensional position and direction of the image capturing apparatus 100 appear. Thereby, the position and orientation of the image capturing apparatus 100 can be reliably detected.

In step S304, the external control apparatus 180 receives the video (an image similar to the composite image 540) obtained by the image capturing apparatus 100 capturing the display device 400, and detects the index 520 from the video. The external control apparatus 180 estimates the position and orientation of the image capturing apparatus 100 based on the detected index 520. The method for estimating the position and orientation of the image capturing apparatus 100 is a typical estimation method by tracking using an index. For example, by fixing the position of the index 520 displayed on the display device 400, a positional relationship of the index 520 is known in advance. In this state, by tracking how the position of the index 520 of the display device 400 moves within the video, the known position of the index 520 is compared with the tracked position of the index 520. By using the result of matching the position of the index 520, it is possible to estimate how the image capturing apparatus 100 has moved relative to the display device 400. For ease of explanation, an example in which the position of the index 520 is fixed has been described. Note that as long as the position of the index 520 can be ascertained, the index 520 may be moved within the video so that the position and orientation of the image capturing apparatus 100 are easier to detect.

Further, a method in which the external control apparatus 180 estimates the position and orientation of the image capturing apparatus 100 has been described. Note that position and orientation estimation of the image capturing apparatus 100 may be implemented using a "separate signal processing apparatus" from the external control apparatus 180. In this case, the separate signal processing apparatus transmits the estimation result to the external control apparatus 180 after estimating the position and orientation of the image capturing apparatus 100. By making the separate signal processing apparatus execute the position and orientation estimation processing of the image capturing apparatus 100 in this way, processing with a heavy processing load such as rendering can be executed in parallel. Therefore, an improvement in the performance of the external control apparatus 180 can be expected.

Further, in another embodiment, there is a method of capturing the display device 400 using a "position and orientation detection apparatus" separate from the image capturing apparatus 100 to acquire a video for estimating the position and orientation of the image capturing apparatus 100. In this case, in the image capturing system 1000, the position and orientation detection apparatus is connected to the external control apparatus 180. Further, the angle of view at which the position and orientation detection apparatus captures the display device 400 is an angle of view at which a number of indices by which it is possible to track at least the three-dimensional position and direction of the image capturing apparatus 100 appear. Furthermore, the position and orientation detection apparatus includes an apparatus that captures a video and a signal processing apparatus that detects the position and orientation of the image capturing apparatus 100. The position and orientation detection apparatus may transmit information on the position and orientation of the image capturing apparatus 100 to the external control apparatus 180.

In step S305, the external control apparatus 180 implements correction for deleting the index on the video captured by the image capturing apparatus 100. In this way, the external control apparatus 180 corrects the index 520 in a video obtained by the image capturing apparatus 100 capturing the display device 400 on which the composite image 540 is displayed. Here, the index 520 appearing in the video is a pixel value not used in the background CG 500. Correcting the index 520 in the video includes, for example, deleting the index 520 from the video, replacing the index 520 with the background CG 500, and replacing the index 520 with background CG 500 corrected based on settings of the image capturing apparatus 100 thereby reducing visibility of the index 520 in the video. As described above, the index 520 is used for tracking the three-dimensional position and direction of the image capturing apparatus 100. The correction method for deleting the index 520 from the video is not particularly limited, but for example, the position of the index 520 is determined by calculating a difference obtained by comparing the background CG 500 with the captured video (an image similar to the composite image 540). Then, the external control apparatus 180 replaces the index 520 in the video with pixels values of the background CG 500 (here, for example, white pixel values).

Further, another method for deleting the index 520 includes processing up to determination of the position of the index 520 as described above. Another method for deleting the index 520 corrects the index 520 in the video based on pixel values of the background CG 500 and pixel values around the index 520 in the video. Thereby, deletion correction of the index 520 can be implemented while also considering the influence of the capturing environment.

Furthermore, another method for deleting the index 520 can include correcting the index 520 in the video by superimposing an image generated based on the background CG 500. Further, this correction processing may be performed by the image processing circuit 182 of the external control apparatus 180. That is, the index 520 may be corrected (deleted, replaced, etc.) in the video obtained by capturing the display device 400 on which the composite image 540 is displayed using the image processing circuit 182 included in the external control apparatus 180. This correction processing can include processing for transmitting the video captured by the image capturing apparatus 100 and information on detection of the position and orientation of the image capturing apparatus 100 to an "image processing apparatus" separate from the external control apparatus 180. In this case, the image processing apparatus can correct (delete, replace, etc.) the index 520 in the video obtained by the image capturing apparatus 100 capturing the display device 400 on which the composite image 540 is displayed. The external control apparatus 180 can acquire the result of correcting the index 520 from the image processing apparatus.

As described above, according to the first embodiment, the image capturing apparatus 100 performs capturing in a state where the composite image 540, in which the index 520 (or index image 510) is synthesized with the background CG 500, is displayed on the display device 400. Thereafter, the index 520 is deleted from the video (similar to the composite image 540) captured by the image capturing apparatus 100. Thereby, the external control apparatus 180 can detect the position and orientation of the image capturing apparatus 100 while acquiring the video captured with the background CG 500. Further, it becomes possible to ensure a long exposure time during capturing by the image capturing apparatus 100, and it is possible to realize a video in which movement is smooth without a sense of incongruity and horizontal streaks of flicker do not occur.

### <Second Embodiment>

In the first embodiment, the display device 400 displayed only the composite image 540 in which the background CG 500 and the index 520 (or index image 510) were synthesized. On the other hand, the second embodiment alternately displays the composite image 540, in which the background CG 500 and the index 520 (or index image 510) are synthesized, and the background CG 500 on the display device 400 in a time-slice manner. Hereinafter, in the second embodiment, differences from the first embodiment will be described.

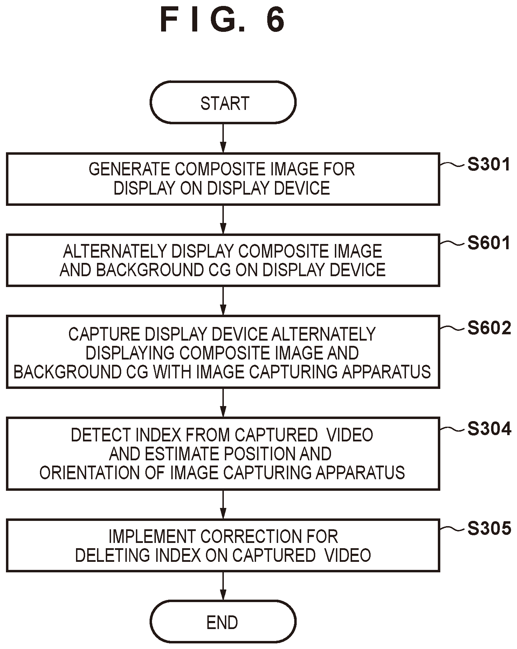

FIG. 6 is a flowchart explaining an operation of the image capturing system 1000 according to the second embodiment. In the following, differences from the first embodiment will be mainly described. Since processing in step S301 is similar to that in the first embodiment, detailed description thereof is omitted. In step S601, the external control apparatus 180 alternately transmits the composite image 540 generated in step S301 and the background CG 500 to the display device 400. Then, the external control apparatus 180 displays the composite image 540 and the background CG 500 on the display device 400 in a time-slice manner. Note that similar to the first embodiment, the display device 400 may implement image display processing after receiving a direct instruction from the external control apparatus 180. Further, after a control part in the display device 400 or a device attached to the display device 400 receives a display instruction signal from the external control apparatus 180, the composite image 540 and the background CG 500 may be displayed on the display device 400 in synchronization with the clock of the display device 400. In this way, display processing may be implemented by providing one step of additional processing.

In step S303, the external control apparatus 180 transmits a capturing instruction to the image capturing apparatus 100 and captures a video including the composite image 540 or the background CG 500 on the display device 400. The external control apparatus 180 may transmit a capturing instruction for every frame to the image capturing apparatus 100. Alternatively, the external control apparatus 180 does not have to transmit a capturing instruction to the image capturing apparatus 100 after transmitting a capturing instruction once until transmitting a capturing stop instruction to the image capturing apparatus 100. Since it is sufficient if capturing can be performed during a period when the user wants to image, the capturing frequency is not particularly mentioned. Further, the image capturing apparatus 100 captures the index 520 of the composite image 540 on the display device 400 with an angle of view that includes a number of indices 520 by which it is possible to detect the position and orientation of the image capturing apparatus 100. Thereby, position and orientation detection of the image capturing apparatus 100 can be reliably implemented.

The image capturing apparatus 100 may add metadata indicating that the video is captured while while the display device 400 is displaying the composite image 540, to the captured video (composite image 540). Then, the external control apparatus 180 can specify a video of a section in which the composite image 540 is being captured based on the metadata, and can correct (delete, replace, etc.) the index 520 in the video of the specified section. Alternatively, the image capturing apparatus 100 adds metadata to the captured video (that is, the background CG 500) during capturing of the display device 400 displaying the background CG 500. Thereby, it may be made possible to
indirectly specify a video captured while the display device 400 is displaying the composite image 540 (that is, the composite image 540).

In step S304, the external control apparatus 180 receives the captured video (that is, a video similar to the composite image 540) captured by the image capturing apparatus 100, and detects the index 520 from the captured video. The external control apparatus 180 estimates the position and orientation of the image capturing apparatus 100 based on the detected index 520. Since the method for estimating position and orientation is similar to the method described in the first embodiment, detailed description thereof is omitted.

In step S305, the external control apparatus 180 implements correction for deleting the index 520 for a section of the video (that is, a video similar to the composite image 540) captured by the image capturing apparatus 100. Thereby, the index 520 appearing in the video is deleted. The correction method for deleting the index 520 may be the same as the method described in the first embodiment. Furthermore, the external control apparatus 180 compares a video captured when the display device 400 is displaying the composite image 540 with a video captured when the display device 400 is displaying the background CG 500. The external control apparatus 180 can also determine the position of the index 520 using such a method. Further, the captured video correction method can include correcting a video captured when the display device 400 is displaying the composite image 540 based on a video of a section captured by the image capturing apparatus 100 when the display device 400 is displaying the background CG.

For example, based on pixel values of a video captured when the display device 400 is displaying the background CG 500, pixel values at the position of the index 520 can be corrected (specifically, deleted) or replaced. Furthermore, correction for superimposing an image generated based on a video captured when the display device 400 is displaying the background CG 500 may be implemented for the index 520 of a video captured when the display device 400 is displaying the composite image 540.

As described above, according to the second embodiment, the image capturing apparatus 100 performs capturing in a state where the composite image 540, in which the index 520 (or index image 510) is synthesized with the background CG 500, and the background CG 500 are alternately displayed on the display device 400 in a time-slice manner. Thereafter, the index 520 is deleted from the captured video (that is, the composite image 540) captured by the image capturing apparatus 100. Thereby, the position and orientation of the image capturing apparatus 100 can be detected while acquiring the video captured with the background CG 500. By comparing the video in which the background CG 500 is captured and the video in which the composite image 540 is captured, interpolation of the index 520 becomes easier. Then, it becomes possible to ensure a long exposure time during capturing by the image capturing apparatus 100, and it is possible to realize a video in which movement is smooth without a sense of incongruity and horizontal streaks of flicker do not occur.

The first and second embodiments have been described as above, but the present disclosure is not limited to such embodiments, and can be arbitrarily changed, added, or deleted in detailed configurations, shapes, materials, quantities, numerical values, and the like within a range not departing from the gist of the present disclosure. Further, according to the present disclosure, it is possible to provide a video in which unnaturalness of movement and appearance is suppressed, and the occurrence of horizontal streaks of flicker is suppressed.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a "non-transitory computer-readable storage medium") to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. A control apparatus (180), comprising:
means for controlling (181) an image displayed on a display device (400) to display a composite image in which background CG and an index are synthesized on the display device, and
means for correcting the index (182) in a video obtained by capturing, with an image capturing apparatus (100), the display device on which the composite image is displayed,
wherein the index is used for tracking a three-dimensional position and direction of the image capturing apparatus.

2. The control apparatus (180) according to claim 1,
wherein the means for correcting (182) correct the index by deleting the index from the video based on the background CG.

3. The control apparatus (180) according to claim 1 or 2,
wherein the means for correcting (182) correct the index by replacing the index appearing in the video with the background CG.

4. The control apparatus (180) according to any one of claims 1 to 3,
wherein the means for correcting (182) correct the index by replacing the index appearing in the video with background CG corrected based on settings of the image capturing apparatus (100).

5. The control apparatus (180) according to any one of claims 1 to 4,
wherein the index appearing in the video is a pixel value not used in the background CG.

6. The control apparatus (180) according to any one of claims 1 to 5,
wherein a display position of the index on the display device (400) is a position suitable for correcting the index appearing in the video.

7. The control apparatus (180) according to any one of claims 1 to 6,
wherein, the means for controlling (181) synthesize the background CG and the index so that a display position of the index on the display device (400) is included within an angle of view of the image capturing apparatus (100).

8. The control apparatus (180) according to claim 7,
wherein the angle of view when the image capturing apparatus (100) captures the display device is an angle of view at which a number of indices by which it is possible to track at least the three-dimensional position and direction of the image capturing apparatus appear.

9. The control apparatus (180) according to any one of claims 1 to 8,
wherein a result of correcting the index in a video obtained by capturing the display device on which the composite image is displayed, is acquired from an image processing apparatus.

10. The control apparatus (180) according to any one of claims 1 to 9,
wherein an image processing circuit (182) included in the control apparatus functions as the means for correcting and corrects the index from a video obtained by capturing the display device on which the composite image is displayed.

11. The control apparatus (180) according to any one of claims 1 to 10,
wherein position and orientation information, obtained by a position and orientation detection apparatus different from the image capturing apparatus (100) capturing the display device (400) on which the composite image is displayed, is acquired from the position and orientation detection apparatus.

12. The control apparatus (180) according to claim 11,
wherein an angle of view at which the position and orientation detection apparatus captures the display device (400) is an angle of view at which a number of indices by which it is possible to track at least the three-dimensional position and direction of the image capturing apparatus (100) appear.

13. The control apparatus (180) according to claim 1,
wherein the composite image and the background CG are displayed on the display device (400) in a time-slice manner, and
the means for correcting (182) correct the index on a video of a section in which the composite image is being captured among videos captured by the image capturing apparatus (100) at an angle of view at which the index appears at least when the composite image is being displayed.

14. The control apparatus (180) according to claim 13,
wherein the means for correcting (182) correct the index on the video of the section in which the composite image is being captured, based on a video of a section in which the background CG is being captured.

15. The control apparatus (180) according to claim 13 or 14,
wherein the video of the section in which the composite image is being captured, to which metadata is added, is acquired from the image capturing apparatus (100), and
the image capturing apparatus adds the metadata indicating that the composite image is being captured to the video of the section in which the composite image is being captured.

16. The control apparatus (180) according to claim 15,
wherein the means for correcting (182) correct the index on the video of the section in which the composite image is being captured, the video being specified based on the metadata.

17. An image capturing system (1000) comprising:
an image capturing apparatus (100);
a display device (400); and
a control apparatus (180) connected to the image capturing apparatus and the display device, the control apparatus comprising:
means for controlling (181) an image displayed on the display device to display a composite image in which background CG and an index are synthesized on the display device, and
means for correcting (182) the index fin a video obtained by capturing, with the image capturing apparatus, the display device on which the composite image is displayed,
wherein the index is used for tracking a three-dimensional position and direction of the image capturing apparatus.

18. A method executed by a control apparatus (180), comprising:
controlling (S302) an image displayed on a display device, including displaying a composite image in which background CG and an index are synthesized on the display device; and
correcting (S305) the index in a video obtained by capturing, with an image capturing apparatus (100), the display device on which the composite image is displayed an image capturing apparatus,
wherein the index is used for tracking a three-dimensional position and direction of the image capturing apparatus.

19. A computer program comprising instructions which, when the program is executed by a computer, cause the computer to carry out a method comprising:
controlling (S302) an image displayed on a display device (400), including displaying a composite image in which background CG and an index are synthesized on the display device; and
correcting (S305) the index in a video obtained by capturing, with an image capturing apparatus (100), the display device on which the composite image is displayed,
wherein the index is used for tracking a three-dimensional position and direction of the image capturing apparatus.
